# EUROPÄISCHE PATENTSCHRIFT

(11) **EP 2 603 343 B1**
(45) Veröffentlichungstag und Bekanntmachung des Hinweises auf die Patenterteilung: **02.11.2016**
(21) Anmeldenummer: 11721761.2
(22) Anmeldetag: 19.05.2011
(51) Int. Cl.: B23D 15/00, B26D 7/00

(54) **FÜHRUNGSVORRICHTUNG FÜR EIN MESSER**
GUIDE DEVICE FOR A KNIFE
DISPOSITIF DE GUIDAGE POUR UN COUTEAU

(30) Priorität: 11.08.2010 DE 102010034023
(43) Veröffentlichungstag der Anmeldung: 19.06.2013
(73) Patentinhaber: SMS group GmbH, 40237 Düsseldorf (DE)
(72) Erfinder: BOHN, Andreas, 57271 Hilchenbach (DE); BAUR, Thomas, 57271 Hilchenbach (DE); MEINHARDT, Ulrich, 57271 Hilchenbach (DE); AGSTEN, Reiner, 57250 Netphen (DE)
(86) Internationale Anmeldenummer: PCT/EP2011/058092
(87) Internationale Veröffentlichungsnummer: WO 2012/019797

(56) Entgegenhaltungen:
- US-A- 1 817 070

## Beschreibung

Die Erfindung betrifft eine Führungsvorrichtung für ein Messer mit einem Schlitten zur Aufnahme des Messers und einer Schlittenführung und einem Gleitelement zwischen der Schlittenführung und dem Schlitten.

Aus der DE 2 122 855 sind geradgeführte obere bewegliche Messerschlitten bekannt, die in einer Blechschere zum Besäumen von Blechen angeordnet sind.

Die DE 1 502 980 beschreibt eine Flachmesser-Saumschere mit einem angetriebenen Obermesserbalken, der über den gesamten Bewegungsablauf am Ständer geführt ist. Über eine Achse ist der Obermesserbalken mit einem Schlitten verbunden, welcher an zwei keilförmig ausgebildeten Gleitstücken geführt ist. Die Gleistücke wiederum sind mit einer Vorrichtung verbunden um damit den Schnittspalt einzustellen.

Aus der DE 1 502 870 ist eine Blechschere zum Besäumen von Blechen bekannt, mit verstellbaren Führungen für den lotrecht geführten Obermesserträger. Dabei sind die Führungen für den Obermesserträger als Zwischenschlitten ausgebildet, welcher in gegen die Schneidebene des Untermesserträgers geneigten Führungen im Scherenständer auf und abwärts bewegbar ist.

Die DE 23 32 898 beschreibt eine Flachmesserschere zum Besäumen von Walzblechen, bei der der obere Messerbalken an den Stirnseiten gegenüber der Gehäuseinnenwand über nachstellbare Führungen verschiebbar geführt ist.

Die DE 1 777 014 beschreibt eine Schere zum Besäumen oder Teilen von Blechen mit einem feststehenden Untermesser und einem angetriebenen Obermesser, welches durch eine ständerfeste Führung gegen Verschieben in Messerlängsrichtung gesichert ist.

Die US 1,817,070 beschreibt eine Führungsvorrichtung für ein Messer einer Strangschere. In eine Schlittenführung wird über einen rohrförmigen Kühlkanal Kühlmittel zum Kühlen der Schlittenführung eingeleitet.

Nachteil bei den bekannten Scheren gemäß dem Stand der Technik ist die vorhandene Gleitreibung zwischen den bewegten Obermesserträgern und den Führungen, welche neben einer Erwärmung der Führungsflächen auch zu Verschmutzungen bedingt durch Abrieb führt. Die Folge ist eine Verringerung der Standzeiten der geführten Bauteile sowie der Führungen.

Der Erfindung liegt daher die Aufgabe zu Grunde, eine bekannte Führungsvorrichtung für ein Messer in einer Maschine und/oder Anlage, wie z.B. einer Schere für Bleche oder Metallbänder, hinsichtlich Wartungsfreundlichkeit und Wirtschaftlichkeit derart zu verbessern, dass die Produktqualität durch den Schneidvorgang nicht nachteilig beeinträchtigt wird.

Diese Aufgabe wird durch die Merkmale des Anspruchs 1 gelöst. Diese sind besonders dadurch gekennzeichnet, dass eine Kühleinrichtung mit einem Kühlmittel zum Kühlen eines Gleitelementes angeordnet ist. Durch die separat angeordnete Kühleinrichtung im Bereich zwischen dem Schlitten und der Schlittenführung werden die geführten Bauteile und die Gleitelemente an den Führungsflächen gekühlt. Dadurch wird eine fortschreitende Erwärmung der aufeinander gleitenden Bauteile unterbunden und führt vorteilhafterweise zu einer Reduzierung des Verschleißes und damit auch zu einer Reduzierung der Verschmutzungen aufgrund von Abrieb. Die Schneidfrequenz des Messers und damit die Gleitgeschwindigkeit und die Flächenpressung des Gleitelementes gegen den Schlitten oder die Schlittenführung können somit vorteilhafterweise erhöht werden. Die Leistungsfähigkeit der Anlage, das heißt der Schere, wird gesteigert.

Zwischen dem Gleitelement und der Schlittenführung und/oder zwischen dem Gleitelement und dem Schlitten ist eine Gleitplatte angeordnet, wobei die Gleitplatte mit der Kühleinrichtung ausgebildet ist. Vorteil dieser Anordnung ist, dass im Zuge von Wartungsarbeiten das Gleitelement oder die Gleitplatte mit der Kühleinrichtung unabhängig voneinander einzeln demontiert und repariert bzw. ausgetauscht werden können. Ein weiterer Vorteil ergibt sich daraus, dass Gleitplatten mit unterschiedlichen Materialien und unterschiedlich ausgebildeten Kühleinrichtungen, angepasst an die jeweilige Anwendung, eingesetzt werden können.

Weiterhin sieht die Erfindung vor, dass die Kühleinrichtung im Schlitten und/oder in der Schlittenführung angeordnet ist. Diese so angeordnete Kühleinrichtung verstärkt die Kühlwirkung der Schlittenführung und führt damit zur Reduzierung der Erwärmung an den Reibflächen.

Weiterhin sieht die Erfindung vor, dass die Kühleinrichtung in dem Gleitelement angeordnet ist. Vorteilhaft ist hierbei, dass das Gleitelement einer direkten Kühlung unterliegt. Durch die im Gleitelement vorgesehenen Hohlräume für die Kühleinrichtung reduzieren sich der Massenanteil des Werkstoffs und damit das Volumen des zu kühlenden Gleitelementes. Der Kühlungseffekt wird damit beschleunigt.

Weiterhin ist vorgesehen, dass das Gleitelement selbstschmierend ausgebildet ist. Vorteilhaft ist hierbei, dass die Kombination eines selbstschmierenden Gleitelementes mit der angeordneten Kühleinrichtung den Verschleiß an den Reibflächen nochmals reduziert und somit auch den Anteil der Verschmutzungen herabsetzt.

Bei einer weiterhin bevorzugten Ausführungsform der erfindungsgemäßen Anordnung ist vorgesehen, dass die Kühleinrichtung als mindestens ein geschlossener oder als ein offener Kühlkanal ausgebildet ist, mit mindestens einem Zulauf und einem Ablauf für ein Kühlmittel. Daraus ergibt sich der Vorteil, dass in Abhängigkeit der fertigungstechnischen Methoden sowie anlagenbedingter Vorgaben die kostengünstigste Lösung für die Anbringung der Kühlkanäle innerhalb der Kühleinrichtung ausgewählt werden kann.

Weiterhin ist vorgesehen, dass das Kühlmittel fest, flüssig oder gasförmig ausgebildet ist. Je nach Anwendung und Anlage kann das wirtschaftlichste Kühlmittel mit der besten Kühlleistung ausgewählt werden.

Weiterhin sieht die Erfindung vor, dass eine Abdeckung angeordnet ist, zum Verschließen des offenen Kühlkanals.

Weitere Vorteile und Einzelheiten der Erfindung ergeben sich aus den Unteransprüchen und aus der nachfolgenden Beschreibung, in der die in den Figuren dargestellten Ausführungsformen der Erfindung näher erläutert werden.

### Beschreibung der Figuren

- Figur 1:: Anordnung einer Gleitplatte, einer Kühleinrichtung und eines Gleitelementes zwischen einem Schlitten und einer Schlittenführung;
- Figur 2:: Innengekühlte Gleitplatte mit einem offenen Kühlkanal;
- Figur 3:: Innengekühlte Gleitplatte mit einem abgeschlossenen Kühlkanal.

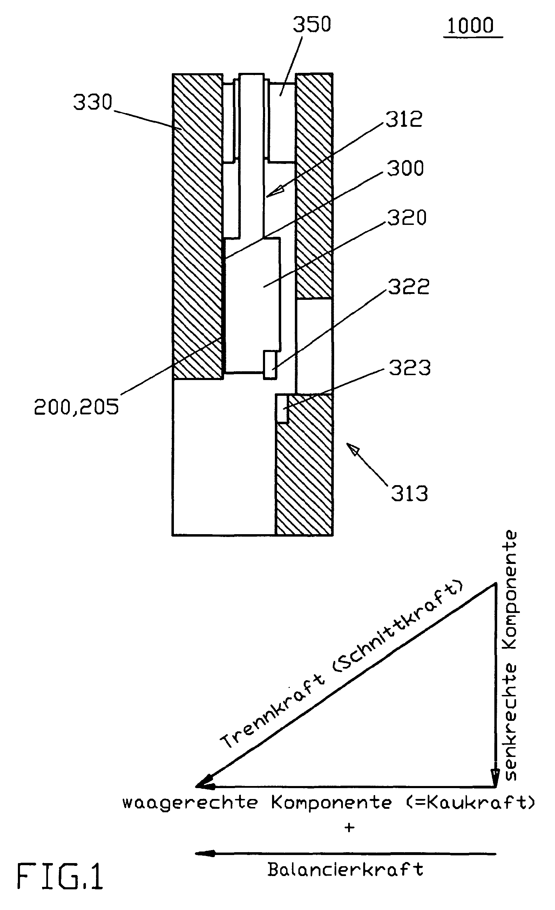

Die Darstellung in der Figur 1 beschreibt einen über eine Kurbelwelle 350 angetriebenen, oberen Messerträger 312 mit einem Schlitten 320, an welchem ein erstes Messer 322 befestigt ist. Weiterhin ist ein unterer, feststehender Messerträger 313 mit einem zweiten Messer 323 angeordnet. Der Schlitten 320 des oberen Messerträgers 312 wird in einer entsprechenden Schlittenführung 330 geführt. Zwischen dem Schlitten 320 und der Schlittenführung 330 sind ein Gleitelement 300 und eine Kühleinrichtung 205 angeordnet. Der Schneidvorgang beschreibt ein Kräftedreieck, in dem sich die resultierende Trennkraft (Schnittkraft) aus einer senkrechten Kraftkomponente beim Auftreffen des oberen und unteren Messers auf das Schneidgut und anschließenden Schneiden des Schneidgutes und einer horizontalen Kraftkomponente, dem Kaudruck, zusammensetzt. Der Kaudruck wird dabei über den oberen Messerträger 312 und das Gleitelement 300 auf die Schlittenführung 330 übertragen. Zum Stabilisieren und zum Andrücken des oberen Messerträgers 312 gegen das Gleitelement 300 während des Anstellens des Messerträgers zum Schneidgut sowie während des Schneidvorgangs kann die horizontale Kraftkomponente durch eine zusätzlich aufgebrachte Balancierkraft, zum Beispiel über Federn, hydraulischen oder pneumatischen Zylindern, ergänzt werden. Dabei stehen die Kräfte des Kaudrucks und der Balancierkraft etwa in einem Verhältnis von 2/3 zu 1/3.

In der dargestellten Ausführung gemäß Figur 1 dient das Gleitelement 300 dazu, den Kaudruck des oberen Messerträgers 312 über den Schlitten 320 aufzunehmen und den Schlitten 320 zu führen und abzustützen. Zwischen dem Gleitelement 300 und der Schlittenführung 330 und/oder zwischen dem Gleit-element 300 und dem Schlitten 320 sind eine Gleitplatte 200 und die Kühleinrichtung 205 angeordnet. Dabei kann die Gleitplatte 200 mit der Kühleinrichtung 205 als ein Bauteil ausgebildet sein. In einer nicht dargestellten Ausführung kann die Kühleinrichtung 205 ebenfalls im Schlitten 320 oder in der Schlittenführung 330 oder in dem Gleitelement 300 selbst angeordnet sein. Besondere Vorteile ergeben sich, wenn das Gleitelement 300 oder die Gleitplatte 200 selbstschmierend ausgebildet ist. Auch die Ausführung des Gleitelementes 300 in Form von nicht dargestellten Gleitleisten ist denkbar. Dabei kann als weitere Maßnahme zur Reduzierung der Reibung die Oberfläche des Gleitelementes 300 an das Reibflächen-Gegenstück angepasst werden und beispielsweise einen balligen Profilquerschnitt bilden.

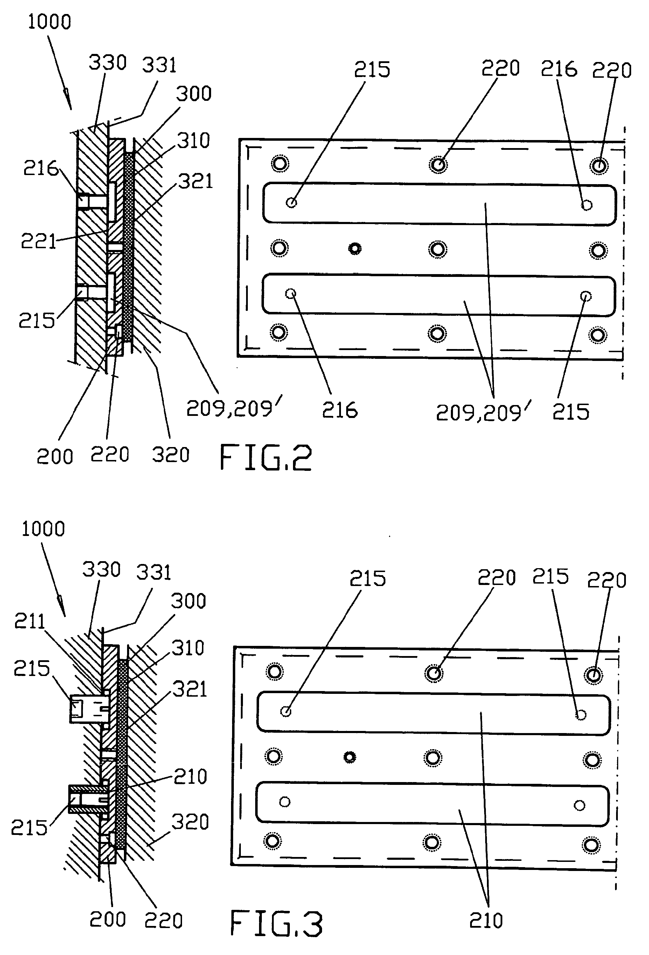

Die Figur 2 beschreibt eine erste Möglichkeit zur konstruktiven Gestaltung und Anordnung der Kühleinrichtung 205 mit mindestens einem offenen Kühlkanal 209. Dabei ist der mindestens eine offene Kühlkanal 209 einseitig, von der Befestigungsfläche 221 eines Bauteils aus gesehen, in den Grundkörper des Bauteils eingefräst. In der hier dargestellten Ansicht entspricht das Bauteil dem Gleitelement 300. In dieser Weise kann der offene Kühlkanal 209 auch in der Schlittenführung 330 oder dem Schlitten 320 oder in zusätzlichen, hier nicht dargestellten Platten angeordnet sein. Als Abdeckung und Abdichtung für den offenen Kühlkanal 209 dient dabei die Fläche des Gegenstückes, gegen welches das Bauteil angeschraubt wird. Es kann aber auch eine separate Abdeckung zum Verschließen des mindestens einen offenen Kühlkanals 209 angeordnet werden. Mindestens ein Zulauf 215, 216 und ein Ablauf 216, 215 für das Kühlmedium werden an geeigneter Stelle an den Kühlkanal angeschlossen. Dazu können beispielsweise einfache Zuleitungen in Form von Schläuchen oder Bohrungen, Anschlussmuffen, Steck- oder Schraubverbindungen für den Zu- und Ablauf 215, 216 angeordnet werden.

In der Figur 3 ist die Kühleinrichtung 205 mit mindestens einem geschlossenen Kühlkanal 210 dargestellt, mit mindestens einem Zulauf 215, 216 und mindestens einem Ablauf 216, 215 für ein Kühlmittel. Ein geschlossener Kühlkanal 210 kann beispielsweise in Form von Bohrungen oder eingegossenen Rohrleitungen, welche als in sich geschlossene Kühlkreisläufe im Inneren eines Bauteils integriert sein.

Es ist auch denkbar, das Bauteil aus zwei spiegelbildlich ausgeführten Hälften zu fertigen, die jeweils mit einseitig eingefrästen offenen Kühlkanal-Hälften 209', wie in Figur 2 gezeigt, ausgebildet sind. Die beiden Hälften werden jeweils mit der Seite der offenen Kühlkanal-Hälften 209' spiegelbildlich gegeneinander gerichtet aufeinander gelegt, so dass die jeweiligen offenen Kühlkanal-Hälften 209' nach dem Aufeinanderlegen einen gemeinsamen geschlossenen Kühlkanal 210 im Inneren des Bauteils bilden. Die beiden Bauteilhälften werden anschließend in Abhängigkeit des verwendeten festen, flüssigen oder gasförmigen Kühlmittels mindestens druckdicht oder gasdicht miteinander verschweißt.

### Bezugszeichenliste

- 1000: Vorrichtung
- 200: Gleitplatte

- 205: Kühleinrichtung

- 209: offener Kühlkanal
- 209': Kühlkanal-Hälfte
- 210: geschlossener Kühlkanal
- 211: Abdeckung
- 215: Anschluss für Einlauf/Ablauf
- 216: Anschluss für Einlauf/Ablauf

- 220: Befestigungsbohrungen

- 221: Befestigungsfläche
- 300: Gleitelement

- 310: Reibfläche
- 312: obere Messerträger

- 313: unterer Messerträger

- 320: Schlitten
- 321: Anlagefläche Schlitten

- 322: erstes Messer

- 323: zweites Messer
- 330: Schlittenführung

- 331: Anlagefläche Schlittenführung

- 350: Kurbelwelle

## Patentansprüche

1. Führungsvorrichtung (1000) für ein Messer (322), aufweisend:
einen Schlitten (320) zur Aufnahme des Messers (322),
eine Schlittenführung (330),
ein Gleitelement (300) zwischen der Schlittenführung (330) und dem Schlitten (320), und
eine Kühleinrichtung (205) mit einem Kühlmittel zum Kühlen des Gleitelementes (300),
**dadurch gekennzeichnet,**
**dass** zwischen dem Gleitelement (300) und der Schlittenführung (330) und/oder zwischen dem Gleitelement (300) und dem Schlitten (320) eine Gleitplatte (200) angeordnet ist, und
die Gleitplatte (200) mit der Kühleinrichtung (205) ausgebildet ist.

2. Vorrichtung nach einem der vorangegangenen Ansprüche,
**dadurch gekennzeichnet,**
**dass** die Kühleinrichtung (205) im Schlitten (320) angeordnet ist.

3. Vorrichtung nach Anspruch 1,
**dadurch gekennzeichnet,**
**dass** die Kühleinrichtung (205) in der Schlittenführung (330) angeordnet ist.

4. Vorrichtung nach Anspruch 1,
**dadurch gekennzeichnet,**
**dass** die Kühleinrichtung (205) in dem Gleitelement (300) angeordnet ist.

5. Vorrichtung nach einem der vorangegangenen Ansprüche,
**dadurch gekennzeichnet,**
**dass** das Gleitelement (300) selbstschmierend ausgebildet ist.

6. Vorrichtung nach einem der vorangegangenen Ansprüche,
**dadurch gekennzeichnet,**
**dass** die Kühleinrichtung (205) als mindestens ein geschlossener Kühlkanal (210) oder als ein offener Kühlkanal (209) ausgebildet ist, mit mindestens einem Zulauf (215,216) und einem Ablauf (215,216) für das Kühlmittel.

7. Vorrichtung nach einem der vorangegangenen Ansprüche,
**dadurch gekennzeichnet,**
**dass** das Kühlmittel fest, flüssig oder gasförmig ausgebildet ist.

8. Vorrichtung nach Anspruch 6 oder 7,
**dadurch gekennzeichnet**
**dass** eine Abdeckung (211) angeordnet ist, zum Verschließen des offenen Kühlkanals (209).

## Claims

1. Guide device (1000) for a knife (322), comprising:
a carriage (320) for reception of the knife (322),
a carriage guide (330),
a slide element (300) between the carriage guide (330) and the carriage (320) and
a cooling device (205) with a coolant for cooling the slide element (300),
**characterised in that**
a slide plate (200) is arranged between the slide element (300) and the carriage guide (330) and/or between the slide element (300) and the carriage (320) and
the slide plate (200) is formed by the cooling device (205).

2. Device according to the preceding claims, **characterised in that** the cooling device (205) is arranged in the carriage (320).

3. Device according to claim 1, **characterised in that** the cooling device (205) is arranged in the carriage guide (330).

4. Device according to claim 1, **characterised in that** the cooling device (205) is arranged in the slide element (300).

5. Device according to any one of the preceding claims, **characterised in that** slide element (300) is constructed to be self-lubricating.

6. Device according to any one of the preceding claims, **characterised in that** the cooling device (205) is constructed as at least one closed cooling channel (210) or open cooling channel (209), with at least one feed (215, 216) and drain (215, 216) for the coolant.

7. Device according to any one of the preceding claims, **characterised in that** the coolant is formed to be solid, liquid or gaseous.

8. Device according to claim 6 or 7, **characterised in that** a cover (211) is arranged for closing the open cooling channel (209).

## Revendications

1. Dispositif de guidage (1000) pour une lame (322), présentant :
un chariot (320) pour la réception de la lame (322) ;
un guidage de chariot (330) ;
un élément de glissement (300) entre le guidage de chariot (330) et le chariot (320) ; et
un mécanisme de refroidissement (205) comprenant un agent de refroidissement pour le refroidissement de l'élément de glissement (300) ;
**caractérisé en ce qu'**on dispose une plaque de glissement (200) entre l'élément de glissement (300) et le guidage de chariot (330) et/ou entre l'élément de glissement (300) et le chariot (320), et la plaque de glissement (200) est réalisée avec le mécanisme de refroidissement (205).

2. Dispositif selon l'une quelconque des revendications précédentes, **caractérisé en ce que** le mécanisme de refroidissement (205) est disposé dans le chariot (320).

3. Dispositif selon la revendication 1, **caractérisé en ce que** le mécanisme de refroidissement (205) est disposé dans le guidage de chariot (330).

4. Dispositif selon la revendication 1, **caractérisé en ce que** le mécanisme de refroidissement (205) est disposé dans l'élément de glissement (300).

5. Dispositif selon l'une quelconque des revendications précédentes, **caractérisé en ce que** l'élément de glissement (300) est réalisé de manière à être autolubrifiant.

6. Dispositif selon l'une quelconque des revendications précédentes, **caractérisé en ce que** le mécanisme de refroidissement (205) est réalisé sous la forme d'au moins un canal de refroidissement fermé (210) ou sous la forme d'un canal de refroidissement ouvert (209) comprenant au moins une entrée (215, 216) et une sortie (215, 216) pour l'agent de refroidissement.

7. Dispositif selon l'une quelconque des revendications précédentes, **caractérisé en ce que** l'agent de refroidissement est réalisé sous forme solide, sous forme liquide ou sous forme gazeuse.

8. Dispositif selon la revendication 6 ou 7, **caractérisé en ce qu'**on prévoit un recouvrement (211) pour la fermeture du canal de refroidissement ouvert (209).
